# EUROPEAN PATENT APPLICATION

(11) **EP 4 734 468 A1**
(43) Date of publication of application: **29.04.2026**
(21) Application number: 25211094.5
(22) Date of filing: 24.10.2025
(51) Int. Cl.: H04L 41/0896, H04L 41/16, H04L 43/08

(54) **NETWORK SLICING FOR SECURE PROMPTING SERVICES**

(30) Priority: 28.10.2024 US 202418928884
(71) Applicant: CALIX, INC., San Jose, CA 95117 (US)
(72) Inventor: BERNARD, Christopher Thomas, Minneapolis, 55410 (US)
(74) Representative: Murgitroyd & Company

(57) **Abstract**

Systems and techniques for network slicing for secure prompting services are described herein. A dedicated network slice is generated, on a network, for transmitting generative artificial intelligence prompts to a plurality of edge computing devices located at subscriber premises. Each edge computing device includes an artificial intelligence (AI) processor configured to generate content locally based on received generative artificial intelligence prompts. A generative artificial intelligence prompt is received from a content provider. Network resource usage is optimized for transmission of the generative artificial intelligence prompt by controlling transmission timing of the generative artificial intelligence prompts over the dedicated network slice to an edge computing device of the plurality of edge computing devices. The generative artificial intelligence prompt is transmitted to the edge computing device.

## Description

### TECHNICAL FIELD

Embodiments described herein generally relate to computer network utilization optimization and, in some embodiments, more specifically to utilizing network slicing for enabling secure prompting services.

### BACKGROUND

Network Slicing, specifically passive optical network (PON) slicing is an emerging utility within access networks for separating traffic and service providers into private domains. In future networks where generative AI appliances are located at the subscriber edge, a prompting network may be desired that can be used to control local artificial intelligence (AI) appliances securely and deterministically.

### SUMMARY

The invention is a system, method and machine-readable medium as defined in the appended claims.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a block diagram of a network slicing architecture.
FIG. 2 is a block diagram of an example of an enhancement to a network slicing architecture for network slicing for secure prompting services, according to an embodiment.
FIG. 3 is a block diagram of an example of an environment and a system for network slicing for secure prompting services, according to an embodiment.
FIG. 4 is a flowchart of an example process for an end-to-end prompt session using network slicing for secure prompting services, according to an embodiment.
FIG. 5 is a block diagram of an example of an edge computing device architecture for network slicing for secure prompting services, according to an embodiment.
FIG. 6 is a data flow diagram of an example, prompt network data flow for network slicing for secure prompting services, according to an embodiment.
FIG. 7 is a flowchart of an example dynamic bandwidth allocation process for network slicing for secure prompting services, according to an embodiment.
FIG. 8 is a block diagram of an example content provider management interface for network slicing for secure prompting services, according to an embodiment.
FIG. 9 is a flowchart of an example artificial intelligence (AI) model update process for network slicing for secure prompting services, according to an embodiment.
FIG. 10 is a block diagram of an example of multi-provider content delivery using network slicing for secure prompting services, according to an embodiment.
FIG. 11 is a flowchart of an example method for network slicing for secure prompting services, according to an embodiment.
FIG. 12 is a block diagram illustrating an example of a machine upon which one or more embodiments may be implemented.

### DETAILED DESCRIPTION

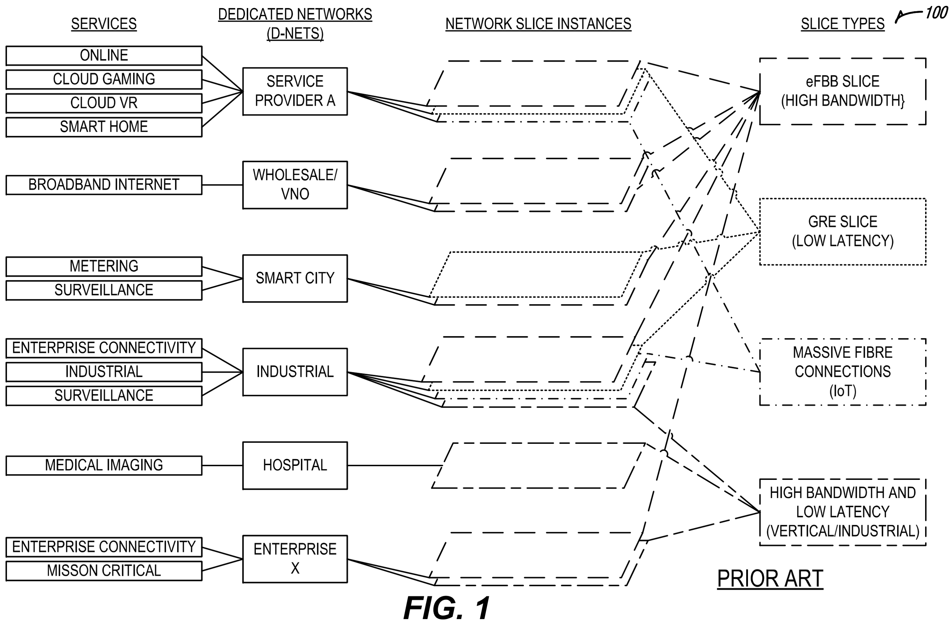

The physical structure of a network slice is defined in standards such as International Telecommunication Union Telecom (ITU-T) Supplement 74 to ITU-T G-series Recommendations Network slicing in a passive optical network context (ITU-T G.SUP74 (12/21)) as shown in FIG. 1. The network slicing architecture 100 illustrates how services can be segmented into network slices. Network slicing isolates services from each other on a shared physical medium. Existing example slices fail to address a service in the context of prompting generative artificial intelligence (AI) content at a subscriber edge network (e.g., a content server on a network segment shared by the subscriber, etc.). The systems and techniques described herein use concepts of network slicing to provide a new type of service (e.g., a prompt network, etc.).

What began as a text prompt for compiling content evolves into highly complex network communication protocols that use tightly controlled network services that can be trusted and secure. A future prompt network is like a social network with content providers controlling a generative AI rendering appliance at the subscriber. For example, a news network may send a text file to an AI service at 5:00 PM to generate a news program at the edge, rather than transmitting live or recorded video of a news broadcast. There will be Gen-AI influencers prompting AIs to create short-form videos like Tik-Tok. Generative AI can control robots in the future - which may be delivered over a prompt network. Health care providers may deploy chat / virtual physician technology over the prompt network. There are many applications here.

These services may be customizable by the subscriber. For example, the subscriber may make a request such as "Show me the evening news but with a dog as the anchor." The content is provided from the trusted source with customized rendered video. Additionally, or alternatively, the video may be generated for an augmented reality/virtual reality (AR/VR) headset where the subscriber specifies a location of the live broadcast viewing. The content provider will set the guard-rails and deliver the content, the local AI appliance will render the images accordingly.

The prompt network virtually becomes a new internet where content is largely rendered by an AI service at the edge network upon being prompted from trusted providers with subscriber modification. This allows near infinite customization of content while reducing the bandwidth of the network connection and storage within the cloud.

The systems and techniques discussed herein provide a prompt network that has a deterministic network slice with a predictable quality of service and latency. The prompt network is isolated from normal access traffic such that an independent service provider focused on delivering service via a subscriber hosted AI appliance can operate on the same infrastructure as an alternate prompt provider or legacy broadband service provider. This separates the prompt network and AI appliance from the normal broadband provider segment/slice.

As subscription prompt services become common there will be over-the-top and free providers. However, there may also be paid higher quality providers that have technology to deliver superior content using their own generative AI technology at the subscriber. The systems and techniques herein enable a network slice to deliver the prompts to facilitate reliable high-quality content while minimizing impact to other network users.

The prompt network provides low latency upstream to act upon subscriber inputs. Network slicing is utilized to deliver this deterministic network service for ultra-low-latency response to subscriber inputs that are acted upon in the cloud. While there may be certain subscriber prompts that are processed locally and outside the view of the service provider, some providers may wish to inspect the subscriber prompt before issuing changes.

A prompt network service provider provides the prompting and subscriptions and maintains models at the edge network for use by an edge computing device such as, by way of example and not limitation, an edge AI appliance. When a new model becomes available, the prompt network arranges a model update on the subscriber hardware, much like a firmware update happens on a network router.

The prompt network is compatible with both retrieval-augmented (RAG) hosted AI accelerators as well as independent AI appliances like a graphics processing unit-based (GPU-based) computing device or dedicated AI server. For example, the AI accelerator may be resident on a robot with a subscription to a robotic control prompting network.

The systems and techniques discussed herein isolate a dedicated prompt network from other services on the shared medium. Conventional isolation techniques such as virtual local area networks (VLANs), transmission control protocol (TCP) ports, etc. may be used to isolate the prompt service. Unlike the conventional techniques, the systems and techniques discussed herein enable a network slice that is a clean demarcation for an alternate service provider to access the dedicated network resource. In the conventional techniques, the alternative service provider shares a network slice with a multitude of other internet services. This provides a slice in the context of a new type of service provider that is specifically optimized for edge-hosted generative AI instances where content is rendered and delivered locally at a subscriber edge and controlled via a secure prompting network. The advantage of the network slice is to isolate the prompt network traffic and service from an infrastructure provider. This enables competitive service providers focused on prompting a network of edge-hosted generative AI instances to operate in a secure, predictable network environment.

Users subscribe to a service using an AI appliance because the provider is trusted. The secure network slicing described herein guarantees that the AI appliance is being prompted by the trusted source. A variety of mechanisms are used to ensure that trust is maintained at slice terminations using built in over-the-top security such that an optical line terminal (OLT) or service provider network cannot alter the service. This device level security supports the trusted prompting network to protect the user, subscriber, and the content where malicious content may be indistinguishable from trusted content.

The systems and techniques discussed herein enable content delivery over optical networks by leveraging network slicing, edge computing, and AI technologies. A network of edge computing devices is equipped with AI processors, located at subscriber premises (or the service provider access edge, or a hybrid of the two working together), capable of generating content locally based on received prompts. The edge devices are connected to the optical network through dedicated network slices, created by a network slicing module, which provide secure and deterministic access for different content providers. A low-bandwidth, low-latency prompt network is established for transmitting small prompts or instructions from content providers to edge devices to reduce transmission of high-bandwidth content. This reduces the bandwidth requirements for content delivery because content generation occurs locally at the subscriber premise using AI models stored on the edge devices.

A prompt network interface receives prompts from content providers and transmits them over the dedicated prompt network slices to the corresponding edge computing devices. To optimize network resource usage, a dynamic bandwidth allocation (DBA) module is used to control transmission timing from the network side rather than the subscriber side. This cooperative DBA technique ensures efficient use of network resources for prompt transmission. Multiple content providers are supported by enabling provisioning of an individual network slice to each provider enabling diverse AI-driven services on the same physical network. This multi-provider support is facilitated through a management interface that allows content providers to securely access and manage their respective AI models on the edge computing devices through their dedicated network slices. AI appliance integration is enabled so that AI compute capabilities can be integrated into residential gateways or deployed as separate appliances. This enables flexible deployment options based on subscriber needs and network capabilities.

The edge-based approach discussed herein creates a distributed cloud architecture that leverages edge compute resources to enable new types of services and applications that benefit (e.g., reduced bandwidth utilization, reduced network latency, reduced data lag, etc.) from local processing. Shifting compute and content generation from centralized cloud infrastructure to the network edge reduces dependence on traditional cloud services for content delivery, enables more efficient use of network resources, and enables new possibilities for content personalization and real-time, AI-driven, content creation based on user preferences, The systems and techniques discussed herein advance capabilities of content delivery networks by combining AI, edge computing, and network slicing technologies to create a more distributed, efficient, and personalized content delivery ecosystem.

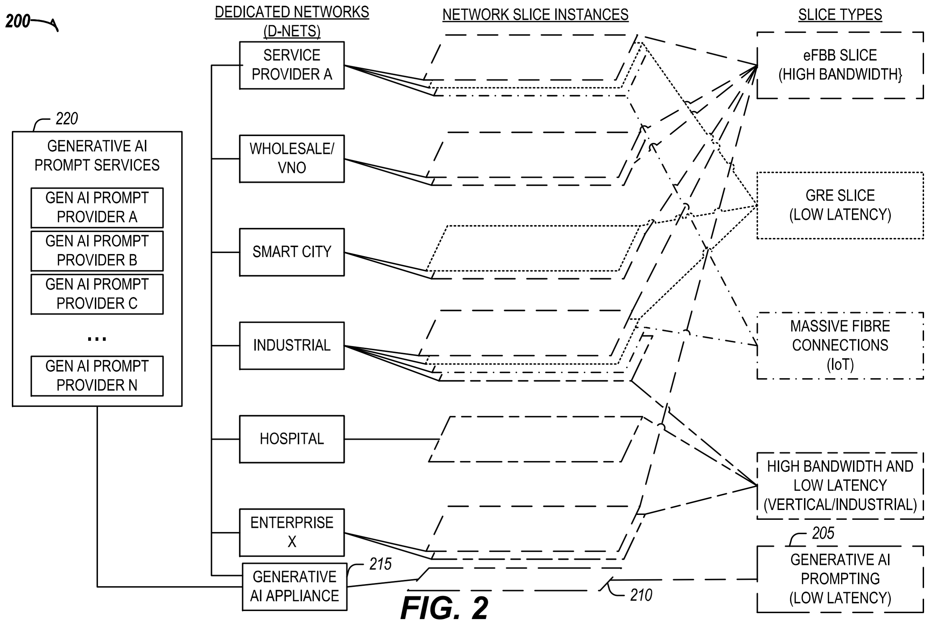

FIG. 2 is a block diagram of an example of an enhancement to a network slicing architecture 200 for network slicing for secure prompting services, according to an embodiment. The enhanced network architecture adds a low latency generative AI prompting slice type 205 that provides network slice instances 210 to generative AI appliances 215 and generative AI prompt services 220. The enhanced network architecture 200 facilitates the systems and techniques described herein.

The enhanced network architecture enables transition from a traditional content delivery network that uses high-bandwidth content transmission from cloud to subscriber to a prompt-based content delivery network that provides low-bandwidth prompt transmission and local content generation (e.g., by the generative AI appliance 215, etc.). This transition reduces network load by moving from centralized content storage and delivery to local content generation and storage in edge network computing devices such as the generative AI appliance 215. The enhancements provided by the systems and techniques described herein reduce computing and network hardware utilization by reducing network utilization.

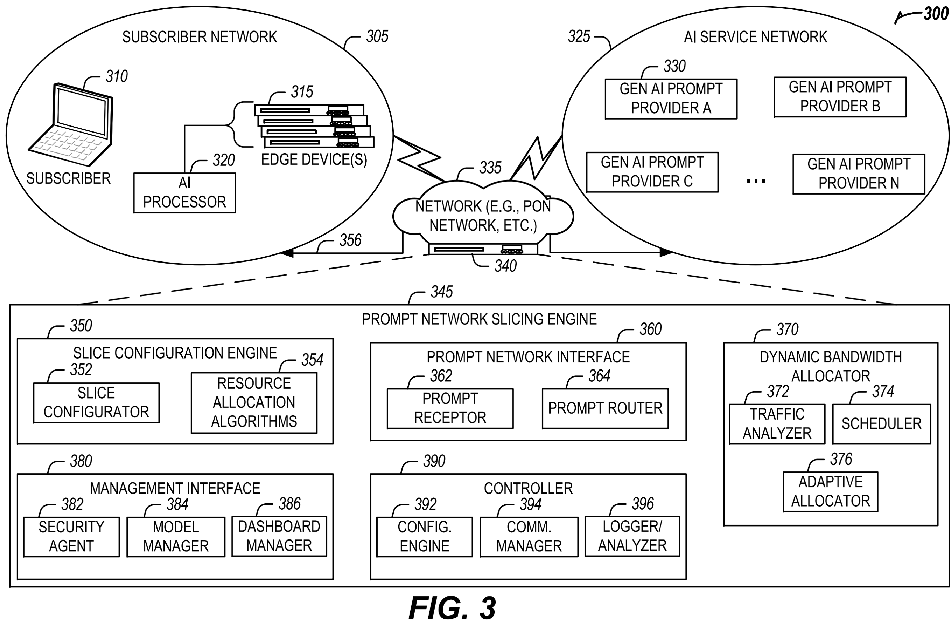

FIG. 3 is a block diagram of an example of an environment 300 and a system 345 for network slicing for secure prompting services, according to an embodiment. In an example, the system 345 is prompt network slicing engine. The environment 300 may include a subscriber network 305 that includes a subscriber computing device 310 and edge computing devices 315 (e.g., an optical network terminal (ONT), optical line terminal (OLT), router, gateway, virtual computing device, cloud service, generative AI appliance, field programmable gate array (FPGA), application specific integrated circuit (ASIC), a system on a chip (SoC), etc. that may include an AI processor 320. The edge computing devices 315 are located at a subscriber premises and include electronic storage for AI models maintained by the generative AI services such as generative AI prompt provider A 330. The environment 300 may include an AI service network 325 that includes generative AI prompt services such as generative AI prompt provider A 330. The subscriber network 305 and the AI service network 325 may be communicatively coupled via a network 335 (e.g., a passive optical network (PON), a gigabit passive optical network (GPON), a 10-gigabit plus passive optical network (10G-PON/XG-PON), an ethernet network, 25GS-PON network, a 50G-PON network, or any future point-to-multipoint optical network. etc.). A network computing device 340 (e.g., an ONT, an OLT, a virtual computing device, FPGA, an ASIC, an SoC, a cloud computing service, etc.) may manage network operations for the network 335.

The network computing device 340 may include the system 345 to deliver content over the network 335. The system may include a variety of components including a slice configuration engine 350 that creates dedicated network slices on the network 335 for transmitting prompts to the edge computing devices 315. The slice configuration engine 350 includes a slice configurator 352 that defines and manages network slices such as a network slice 356 and resource allocation algorithms 354 that assign network resources to the network slice 356.

The system 345 may include a prompt network interface 360 that facilitates transmission of prompts from the generative AI prompt provider A 330 to the edge computing devices 315. The prompt network interface 360 includes a prompt receptor 362 that receives prompts from the generative AI prompt provider A 330 and a prompt router 364 that directs prompts to the network slice 356 and edge computing devices 315. In an example, each generative AI prompt provider in the AI service network 325 may be configured to use an individual network slice such as network slice 356 or may share the network slice 356 depending on configuration based on service level, slice utilization, etc.

The system 345 may include a dynamic bandwidth allocator (DBA) 370 that optimizes network resource usage for prompt transmission. The DBA includes a traffic analyzer 372 that monitors network usage, a scheduler 374 that controls transmission timing from the network side, and an adaptive allocator 376 that adjusts bandwidth based on real-time traffic needs.

The system 345 may include a management interface 380 that enables content providers to securely access and manage their AI models on the edge computing devices 315. The management interface 380 includes a security agent 382 that provides authentication and authorization for secure access, a model manager 384 that enables management of AI models, and a dashboard manager 386 that enables system metric tracking (e.g., performance metrics, utilization metrics, reliability metrics, etc.).

The system 345 may include a controller 390 that orchestrates overall system operation. The controller 390 includes a configuration engine 392 that enables setup and management of system parameters, a communication manager 394 that coordinates interactions amongst components of the system 345, and a logger/analyzer 396 that provides system monitoring and performance optimization.

When a content provider (e.g., generative AI prompt provider A 330, etc.) wants to deliver content, they submit a prompt via the management interface 380. The prompt is then passed to the prompt network interface 360, which determines the appropriate network slice and edge device destination. The slicing configuration engine 350 ensures that the prompt is transmitted over the network slice 356 for that content provider. As the prompt is being transmitted, the DBA 370 optimizes the network resource usage, controlling the transmission timing to ensure efficient use of bandwidth. Upon receiving the prompt, an edge computing device (e.g., of the edge computing devices 315) uses its AI processor 320 to generate the content locally based on the received prompt and the AI models stored in its local storage. This local content generation significantly reduces the bandwidth requirements compared to traditional content delivery methods.

Throughout this process, the controller 390 oversees the operation, managing system configuration, facilitating communication between components, and collecting performance data for ongoing optimization. Content providers can use the management interface 380 to securely access and update their AI models on the edge computing devices 315, monitor performance, and make necessary adjustments to their content delivery strategies.

This system architecture enables a flexible, efficient, and secure technique for delivering AI-generated content over networks such as, by way of example and not limitation, optical networks, leveraging the power of the edge computing devices and network slicing technologies.

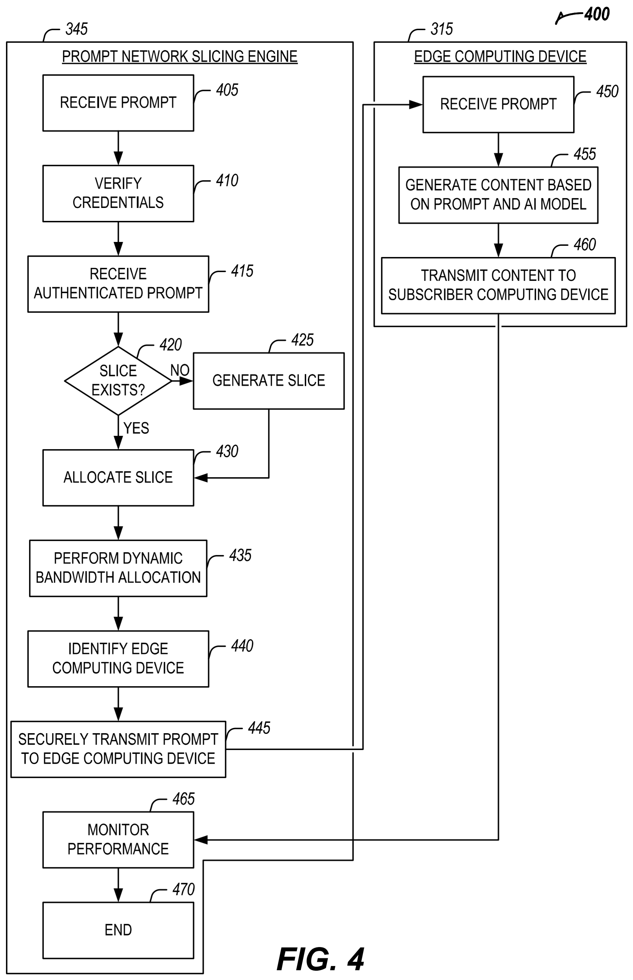

FIG. 4 is a flowchart of an example process 400 for an end-to-end prompt session using network slicing for secure prompting services, according to an embodiment. The process 400 may provide features as described in FIGS. 2 and 3. FIG. 4 illustrates the step-by-step process 400 from receipt of a prompt from a content provider that has been securely transmitted over a dedicated network slice, processed by an edge computing device, and results in transmission of locally generated content for the subscriber. The process 400 leverages network slicing, dynamic bandwidth allocation, and edge AI processing to efficiently deliver personalized content while minimizing bandwidth usage on the optical network.

At operation 405. a prompt is received from a content provider via a management interface (e.g., the model manager 384 as described in FIG. 3, etc.). At operation 410, provider credentials and permissions are verified (e.g., by the security agent 382 as described in FIG. 3, etc.) using authentication and authorization techniques.

At operation 415, an authenticated prompt is received (e.g., via the prompt receptor 362 as described in FIG. 3, etc.). At decision 420, it is determined (e.g., by the slice configurator 352 as described in FIG. 3, etc.) if a network slice exists for the provider. If a network slice does not exist a new network slice is generated (e.g., via the prompt receptor 362 as described in FIG. 3, etc.) at operation 425. If it is determined a network slice exists at decision 420 or a new network slice has been generated at operation 425, network traffic is analyzed (e.g., by the traffic analyzer 372 as described in FIG. 3, etc.) and appropriate bandwidth is allocated (e.g., by the adaptive allocator 376 as described in FIG. 3, etc.) for transmission of the prompt at operation 430.

At operation 440, an edge device target is identified (e.g., by the prompt router 364 as described in FIG. 3, etc.) for the prompt. At operation 445, the prompt is securely transmitted (e.g., by the prompt router 364 as described in FIG. 3, etc.) over the dedicated network slice to the target edge device(s).

At operation 450, the edge computing device(s) (e.g., the edge computing devices 315 as described in FIG. 3, etc.) receive the prompt via a network interface. At operation 455, content is generated by the edge computing device(s) by invoking an AI processor (e.g., the AI processor 320 as described in FIG. 3, etc.) using the prompt and a model previously or concurrently provided by the provider for storage at the edge computing device(s).

At operation 460, the generated content is transmitted to the subscriber computing device (e.g., television, virtual reality headset, etc.) by the edge computing device. At operation 465, the prompt network slicing engine logs (e.g., using the logger/analyzer 396 as described in FIG. 3, etc.) performance metrics and updates (e.g., using the dashboard manager 386 as described in FIG. 3, etc.) a dashboard using the metrics. At operation 470, the prompt session is completed, and the prompt network slicing engine prepares for a next session.

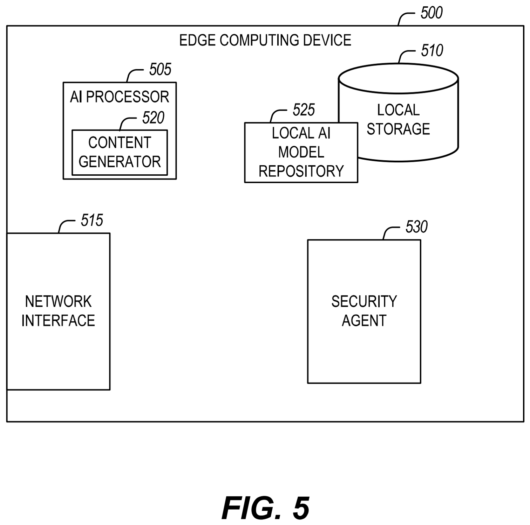

FIG. 5 is a block diagram of an example of an edge computing device 500 architecture for network slicing for secure prompting services, according to an embodiment. The edge computing device 500 includes an AI processor 505 that generates content locally based on received prompts. Local storage 510 (e.g., non-transitory machine-readable medium, memory, non-volatile memory, disk storage, etc.) stores AI models and generated content. A network interface 515 (e.g., a network interface card, shared bus adapter, etc.) connects the edge device to a network upon which the received prompt was transmitted.

A content generator 520 is included with the AI processor 505 to process prompts and generate content. The content generator 520 accesses a local AI model repository 525 that stores and manages AI models for content generation. A security agent 530 ensures secure communication and processing by implementing a variety of security protocols and techniques to secure incoming and outgoing data as well as components and stored data of the edge computing device 500.

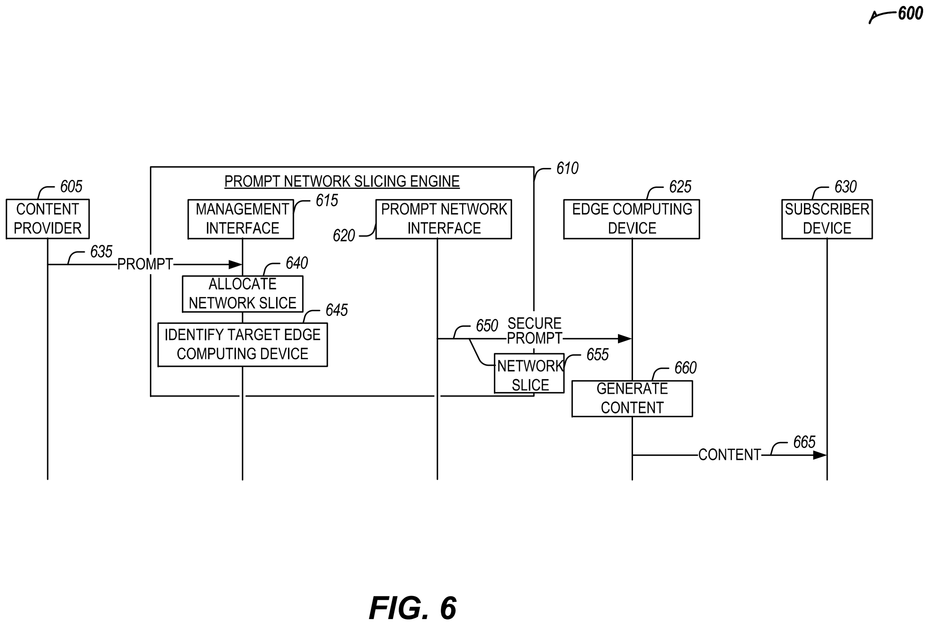

FIG. 6 is a data flow diagram of an example, prompt network data flow 600 for network slicing for secure prompting services, according to an embodiment. The data flow 600 may provide features as described in FIGS. 2 through 5. The data flow 600 illustrates the flow of a prompt from a content provider to a prompt network slicing engine 610 that includes a management interface 615 and a prompt network interface 620 and from the prompt network interface 620 to an edge computing device 625. The edge computing device 625 transmits content generated using the prompt to a subscriber device 630.

The content provider 605 initiates the prompt and transmits the prompt 635 to a management interface 615 of the prompt network slicing engine 610. The management interface 615 receives the prompt and works in conjunction with other components of the prompt network slicing engine 610 (e.g., as described in FIGS. 3 and 4) to allocate a network slice 655 to the provider at operation 640. If a network slice 655 has been previously allocated, the content provider 605 may transmit the initial prompt 635 to the management interface via the network slice bypassing creation of a new network slice. The management interface 615 works in conjunction with other components of the prompt network slicing engine 610 (e.g., as described in FIGS. 3 and 4) to identify a target edge computing device at operation 645.

The prompt network interface 620 processes and routes a secure prompt 650 based on the original prompt to the edge computing device using the network slice 655. An edge computing device (e.g., the edge computing device 500 as described in FIG. 5, etc.) receives and processes the secure prompt and uses the secure prompt and locally stored AI models to generate content at operation 660. The edge device transmits the generated content to the subscriber device 630 on the local network. The low bandwidth flow of the prompt using the network slice 655 results in minimal data transfer for the prompt.

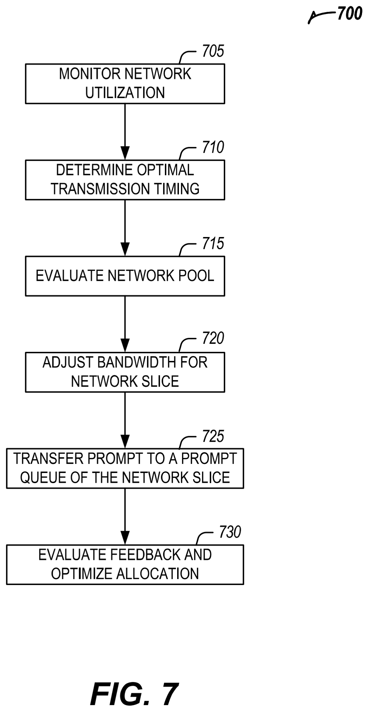

FIG. 7 is a flowchart of an example dynamic bandwidth allocation process 700 for network slicing for secure prompting services, according to an embodiment. The process 700 may provide features as described in FIGS. 2 through 6.

At operation 705, network usage is monitored (e.g., by the traffic analyzer 372 as described in FIG. 3, etc.). At operation 710, optimal transmission timing is determined (e.g., by the scheduler 374 as described in FIG. 3, etc.) for a prompt using a scheduling algorithm. At operation 715, a network pool is evaluated (e.g., by the traffic analyzer 372 as described in FIG. 3, etc.) to identify available resources. At operation 720, bandwidth is adjusted (e.g., by the adaptive allocator 376 as described in FIG. 3, etc.) for a network slice based on the evaluation of the network resource pool. At operation 725, the prompt is transferred to prompt queue of the network slice that manages incoming prompts for transmission. At operation 730, feedback metrics are received and evaluated (e.g., by the adaptive allocator 376 as described in FIG. 3, etc.) for use in continuous optimization of network slice allocation.

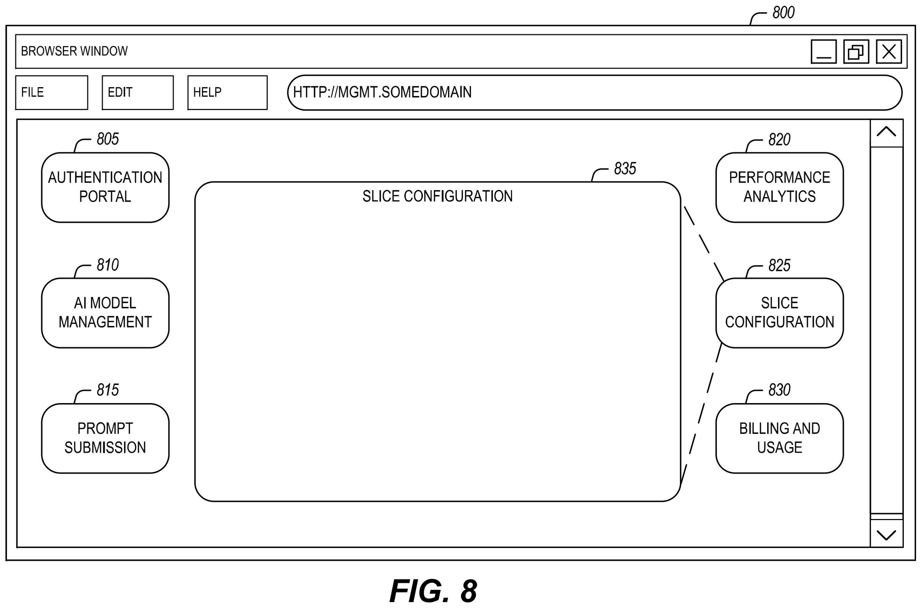

FIG. 8 is a block diagram of an example content provider management interface 800 for network slicing for secure prompting services, according to an embodiment. The example management interface 800 may provide features as described in FIGS. 2 through 7. The example management interface 800 may include a variety of user interface elements such as, by way of example and not limitation, an authentication portal 805 that enables secure login for content providers, an AI model management dashboard 810 that provides an interface for uploading and managing AI models, a prompt submission form 815 that is a tool for creating and submitting prompts, a performance analytics element 820 that displays metrics on content delivery and network usage, a slice configuration panel 825 that enables customization of network slice parameters, and a billing and usage information element 830 that provides details on resource consumption and costs.

In the example management interface 800, a user may select an element and it may populate an expansion user interface element 835. For example, a user may select the slice configuration panel 825 user interface element and it may populate the expansion user interface element 835 to display configuration options available for a network slice associated with the user.

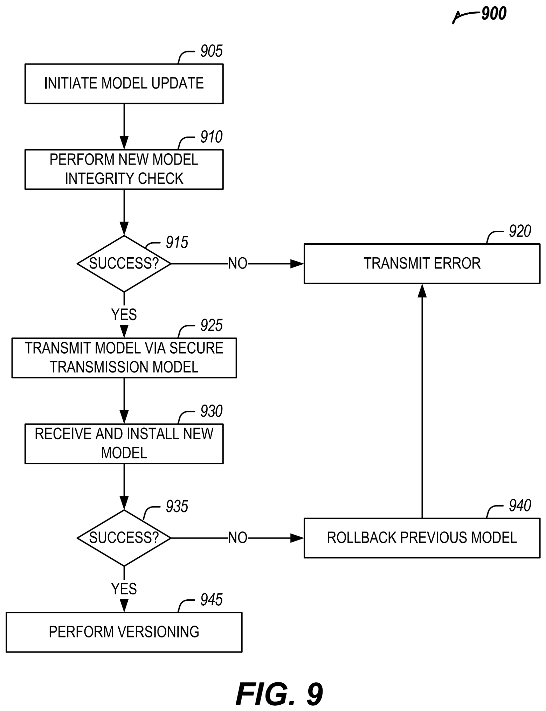

FIG. 9 is a flowchart of an example artificial intelligence (AI) model update process 900 for network slicing for secure prompting services, according to an embodiment. The process 900 may provide features as described in FIGS. 2 through 8.

At operation 905, a content provider initiates a model update to update a model stored locally at an edge computing device(s). At operation 910, validation is performed (e.g., by the model manager 384 as described in FIG. 3, etc.) for integrity and compatibility of the new model. 907. At decision 915, it is determined if validation was successful. If validation failed, an error is transmitted at operation 920. If validation is successful, the model is transmitted to the edge computing device(s) via a secure transmission channel providing an encrypted pathway for model distribution. At operation 930, the edge device(s) receive and install the new model.

At decision 935, it is determined if the installation was successful. If the installation is successful, versioning is performed to manage different versions of the AI model, and the update completes. If the install is not successful, a rollback operation is performed at operation 940, if necessary, to revert to the previously installed version and an error is transmitted at operation 920. The rollback operation 940 may be initiated manually even if the install was successful to revert to a previous version (e.g., as indicated by the versions issued during versioning 945.

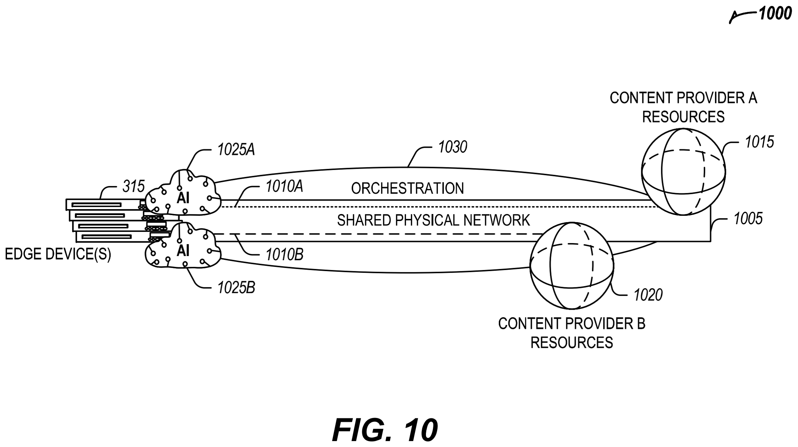

FIG. 10 is a block diagram of an example of multi-provider content delivery 1000 using network slicing for secure prompting services, according to an embodiment. FIG. 10 illustrates separation of dedicated prompt network slices for multiple AI service providers allowing each provider to maintain a secure channel for prompt transmission free of potential interference from other providers.

A physical network infrastructure 1005 having multiple network slices 1010A and 1010B is shared by resources of a first content provider A 1015 and a second content provider B 1020. The resources may include respective network slices, edge compute resources, and management interfaces for the first content provider A 1015 and the second content provider B 1020. The first content provider A 1015 and the second content provider B 1020 may have shared access to the edge device(s) 315 that are capable of securely executing multiple provider models such as a first model set 1025A and a second model set 1025B. An orchestration layer 1030 of the network manages resource allocation and isolation of first content provider A 1015 resources from second content provider B 1020 resources and vice versa. As illustrated in FIG. 9, multiple content providers may have respective dedicated prompt network slices allowing each provider to independently configure and tune its network slices to best accommodate individual prompt network traffic. The orchestration layer 1030 maintains separation so that traffic, configuration changes, misconfigurations, etc. of other providers on the network do not interfere with other providers.

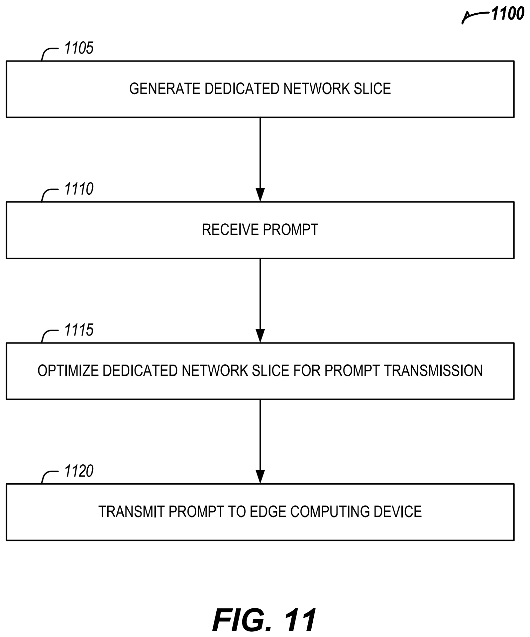

FIG. 11 is a flowchart of an example method 1100 for network slicing for secure prompting services, according to an embodiment. The method 1100 may provide features as described in FIGS. 2 through 10.

A dedicated network slice is generated (e.g., by the slice configuration engine 350 as described in FIG. 3, etc.), on a network, for transmitting generative artificial intelligence prompts to a plurality of edge computing devices located (e.g., the edge computing device(s) 315 as described in FIG. 3, etc.) at subscriber premises (e.g., at operation 1105). Each edge computing device includes an artificial intelligence (AI) processor configured to generate content locally based on received generative artificial intelligence prompts. In an example, the network may be a passive optical network (PON). In an example, the dedicated network slice may be isolated from other content providers transmitting generative AI prompts on the network.

A generative artificial intelligence prompt is received (e.g., by the prompt receptor 362 as described in FIG. 3, etc.) from a content provider (e.g., at operation 1110). Network resource usage is optimized (e.g., by the DBA 370 as described in FIG. 3, etc.) for transmission of the generative artificial intelligence prompt by controlling transmission timing of the generative artificial intelligence prompts over the dedicated network slice to an edge computing device of the plurality of edge computing devices (e.g., at operation 1115). In an example, the edge computing device may be a generative AI appliance. In an example, the edge computing device may be identified as a target for the generative artificial intelligence prompt based on network proximity of the edge computing device to a subscriber computing device (e.g., the subscriber computing device 110 as described in FIG. 3, etc.) designated as an end point for the content. In an example, traffic of the network may be evaluated to determine resource availability and bandwidth may be dynamically assigned to the dedicated network slice based on the resource availability.

The generative artificial intelligence prompt is transmitted (e.g., by the prompt network interface 360 as described in FIG. 3, etc.) to the edge computing device (e.g., at operation 1120). In an example, an AI model is transmitted to the edge computing device for local storage in a memory of the edge computing device and delivery of content generated by the edge computing device using the AI model and the generative artificial intelligence prompts is monitored to collect a plurality of metrics. In an example, the plurality of metrics is evaluated (e.g., by the DBA 370 as described in FIG. 3, etc.) to identify a configuration optimization for allocation of the dedicated network slice and an allocation AI model is refined by applying the configuration optimization to the allocation AI model. In an example, the content may be transmitted from the edge computing device to a subscriber computing device designated as an end point for the content. In an example, transmission of the generative artificial intelligence prompt may have a lower bandwidth utilization than transmission of generated content from the content provider.

In an example, a request may be received via a management user interface from the content provider to manage an AI model at the plurality of edge computing devices. The AI model may be stored locally at each edge computing device of the plurality of edge computing devices and the content is generated (e.g., by the AI processor 320 as described in FIG. 3, etc.) locally using the generative artificial intelligence prompt and the AI model. Upon successful authentication of the content provider via the management user interface, the AI model may be transmitted to the plurality of edge computing devices and successful storage of the AI model may be validated for each edge computing device of the plurality of edge computing devices. In an example, upon a determination that storage of the AI model was unsuccessful, the AI model may be reverted to an immediately preceding version of the AI model.

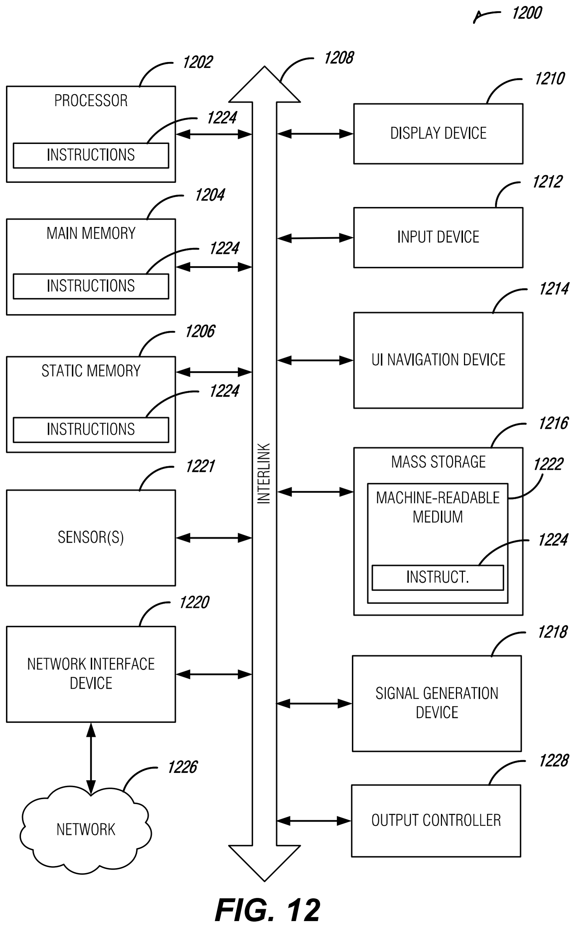

FIG. 12 illustrates a block diagram of an example machine 1200 upon which any one or more of the techniques (e.g., methodologies) discussed herein may perform. In alternative embodiments, the machine 1200 may operate as a standalone device or may be connected (e.g., networked) to other machines. In a networked deployment, the machine 1200 may operate in the capacity of a server machine, a client machine, or both in server-client network environments. In an example, the machine 1200 may act as a peer machine in peer-to-peer (P2P) (or other distributed) network environment. The machine 1200 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate by, logic or several components, or mechanisms. Circuit sets are a collection of circuits implemented in tangible entities that include hardware (e.g., simple circuits, gates, logic, etc.). Circuit set membership may be flexible over time and underlying hardware variability. Circuit sets include members that may, alone or in combination, perform specified operations when operating. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

Machine (e.g., computer system) 1200 may include a hardware processor 1202 (e.g., a central processing unit (CPU), a graphics processing unit (GPU), a hardware processor core, or any combination thereof), a main memory 1204 and a static memory 1206, some or all of which may communicate with each other via an interlink (e.g., bus) 1208. The machine 1200 may further include a display unit 1210, an alphanumeric input device 1212 (e.g., a keyboard), and a user interface (UI) navigation device 1214 (e.g., a mouse). In an example, the display unit 1210, input device 1212 and UI navigation device 1214 may be a touch screen display. The machine 1200 may additionally include a storage device (e.g., drive unit) 1216, a signal generation device 1218 (e.g., a speaker), a network interface device 1220, and one or more sensors 1221, such as a global positioning system (GPS) sensor, compass, accelerometer, or other sensors. The machine 1200 may include an output controller 1228, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 1216 may include a machine readable medium 1222 on which is stored one or more sets of data structures or instructions 1224 (e.g., software) embodying or utilized by any one or more of the techniques or functions described herein. The instructions 1224 may also reside, completely or at least partially, within the main memory 1204, within static memory 1206, or within the hardware processor 1202 during execution thereof by the machine 1200. In an example, one or any combination of the hardware processor 1202, the main memory 1204, the static memory 1206, or the storage device 1216 may constitute machine readable media.

While the machine readable medium 1222 is illustrated as a single medium, the term "machine readable medium" may include a single medium or multiple media (e.g., a centralized or distributed database, and/or associated caches and servers) configured to store the one or more instructions 1224.

The term "machine readable medium" may include any medium that is capable of storing, encoding, or carrying instructions for execution by the machine 1200 and that cause the machine 1200 to perform any one or more of the techniques of the present disclosure, or that is capable of storing, encoding, or carrying data structures used by or associated with such instructions. Non-limiting machine-readable medium examples may include solid-state memories, and optical and magnetic media. In an example, machine readable media may include transitory propagating signals. In another example, machine readable media may exclude transitory propagating signals (in which case the term may apply only to non-transitory media, e.g., non-transitory machine-readable storage media). Specific examples of non-transitory machine-readable storage media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 1224 may further be transmitted or received over a communications network 1226 using a transmission medium via the network interface device 1220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, LoRa^{®}/LoRaWAN^{®} LPWAN standards, etc.), IEEE 802.15.4 family of standards, peer-to-peer (P2P) networks, 3^{rd} Generation Partnership Project (3GPP) standards for 4G and 5G wireless communication including: 3GPP Long-Term evolution (LTE) family of standards, 3GPP LTE Advanced family of standards, 3GPP LTE Advanced Pro family of standards, 3GPP New Radio (NR) family of standards, among others. In an example, the network interface device 1220 may include one or more physical jacks (e.g., Ethernet, coaxial, or phone jacks) or one or more antennas to connect to the communications network 1226. In an example, the network interface device 1220 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1200, and includes digital or analog communications signals or other intangible medium to facilitate communication of such software.

### Additional Notes & Examples

Example 1 is a system for network slicing for edge-based delivery of generative artificial intelligence prompts comprising: at least one processor; and memory comprising instructions that, when executed by the at least one processor, cause the at least one processor to perform operations to: generate a dedicated network slice, on a network, for transmitting generative artificial intelligence prompts to a plurality of edge computing devices located at subscriber premises, each edge computing device comprising an artificial intelligence (AI) processor configured to generate content locally based on received generative artificial intelligence prompts; receive a generative artificial intelligence prompt from a content provider; optimize network resource usage for transmission of the generative artificial intelligence prompt by controlling transmission timing of the generative artificial intelligence prompts over the dedicated network slice to an edge computing device of the plurality of edge computing devices; and transmit the generative artificial intelligence prompt to the edge computing device.

In Example 2, the subject matter of Example 1 includes, the memory further comprising instructions that, when executed by the at least one processor, cause the at least one processor to perform operations to: transmit an AI model to the edge computing device for local storage in a memory of the edge computing device; and monitor delivery of content generated by the edge computing device using the AI model and the generative artificial intelligence prompts to collect a plurality of metrics.

In Example 3, the subject matter of Example 2 includes, the memory further comprising instructions that, when executed by the at least one processor, cause the at least one processor to perform operations to: evaluate the plurality of metrics to identify a configuration optimization for allocation of the dedicated network slice; and refine an allocation AI model by applying the configuration optimization to the allocation AI model.

In Example 4, the subject matter of Examples 1-3 includes, the memory further comprising instructions that, when executed by the at least one processor, cause the at least one processor to perform operations to: receive, via a management user interface, a request from the content provider to manage an AI model at the plurality of edge computing devices, the AI model stored locally at each edge computing device of the plurality of edge computing devices, and wherein the content is generated locally using the generative artificial intelligence prompt and the AI model; upon successful authentication of the content provider via the management user interface, transmit the AI model to the plurality of edge computing devices; and validate successful storage of the AI model by each edge computing device of the plurality of edge computing devices.

In Example 5, the subject matter of Example 4 includes, the memory further comprising instructions that, when executed by the at least one processor, cause the at least one processor to perform operations to, upon a determination that storage of the AI model was unsuccessful, revert the AI model to an immediately preceding version of the AI model.

In Example 6, the subject matter of Examples 1-5 wherein, the network is a passive optical network (PON).

In Example 7, the subject matter of Examples 1-6 wherein, the edge computing device is a generative AI appliance.

In Example 8, the subject matter of Examples 1-7 wherein, the edge computing device is identified as a target for the generative artificial intelligence prompt based on network proximity of the edge computing device to a subscriber computing device designated as an end point for the content.

In Example 9, the subject matter of Examples 1-8 includes, the memory further comprising instructions that, when executed by the at least one processor, cause the at least one processor to perform operations to transmit the content from the edge computing device to a subscriber computing device designated as an end point for the content.

In Example 10, the subject matter of Examples 1-9 includes, the memory further comprising instructions that, when executed by the at least one processor, cause the at least one processor to perform operations to isolate the dedicated network slice from other content providers transmitting generative artificial intelligence prompts on the network.

In Example 11, the subject matter of Examples 1-10 wherein, transmission of the generative artificial intelligence prompt has a lower bandwidth utilization than transmission of generated content from the content provider.

In Example 12, the subject matter of Examples 1-11 includes, the memory further comprising instructions that, when executed by the at least one processor, cause the at least one processor to perform operations to: evaluate traffic of the network to determine resource availability; and dynamically assign bandwidth to the dedicated network slice based on the resource availability.

Example 13 is at least one machine-readable medium comprising instruction for network slicing for edge-based delivery of generative artificial intelligence prompts that, when executed by at least one processor, cause the at least one processor to perform operations to: generate a dedicated network slice, on a network, for transmitting generative artificial intelligence prompts to a plurality of edge computing devices located at subscriber premises, each edge computing device comprising an artificial intelligence (AI) processor configured to generate content locally based on received generative artificial intelligence prompts; receive a generative artificial intelligence prompt from a content provider; optimize network resource usage for transmission of the generative artificial intelligence prompt by controlling transmission timing of the generative artificial intelligence prompts over the dedicated network slice to an edge computing device of the plurality of edge computing devices; and transmit the generative artificial intelligence prompt to the edge computing device.

In Example 14, the subject matter of Example 13 includes, instructions that, when executed by the at least one processor, cause the at least one processor to perform operations to: transmit an AI model to the edge computing device for local storage in a memory of the edge computing device; and monitor delivery of content generated by the edge computing device using the AI model and the generative artificial intelligence prompts to collect a plurality of metrics.

In Example 15, the subject matter of Example 14 includes instructions that, when executed by the at least one processor, cause the at least one processor to perform operations to: evaluate the plurality of metrics to identify a configuration optimization for allocation of the dedicated network slice; and refine an allocation AI model by applying the configuration optimization to the allocation AI model.

In Example 16, the subject matter of Examples 13-15 includes, instructions that, when executed by the at least one processor, cause the at least one processor to perform operations to: receive, via a management user interface, a request from the content provider to manage an AI model at the plurality of edge computing devices, the AI model stored locally at each edge computing device of the plurality of edge computing devices, and wherein the content is generated locally using the generative artificial intelligence prompt and the AI model; upon successful authentication of the content provider via the management user interface, transmit the AI model to the plurality of edge computing devices; and validate successful storage of the AI model by each edge computing device of the plurality of edge computing devices.

In Example 17, the subject matter of Example 16 includes instructions that, when executed by the at least one processor, cause the at least one processor to perform operations to, upon a determination that storage of the AI model was unsuccessful, revert the AI model to an immediately preceding version of the AI model.

In Example 18, the subject matter of Examples 13-17 wherein, the network is a passive optical network (PON).

In Example 19, the subject matter of Examples 13-18 wherein, the edge computing device is a generative AI appliance.

In Example 20, the subject matter of Examples 13-19 wherein, the edge computing device is identified as a target for the generative artificial intelligence prompt based on network proximity of the edge computing device to a subscriber computing device designated as an end point for the content.

In Example 21, the subject matter of Examples 13-20 includes instructions that, when executed by the at least one processor, cause the at least one processor to perform operations to transmit the content from the edge computing device to a subscriber computing device designated as an end point for the content.

In Example 22, the subject matter of Examples 13-21 includes instructions that, when executed by the at least one processor, cause the at least one processor to perform operations to isolate the dedicated network slice from other content providers transmitting generative artificial intelligence prompts on the network.

In Example 23, the subject matter of Examples 13-22 wherein, transmission of the generative artificial intelligence prompt has a lower bandwidth utilization than transmission of generated content from the content provider.

In Example 24, the subject matter of Examples 13-23 includes instructions that, when executed by the at least one processor, cause the at least one processor to perform operations to: evaluate traffic of the network to determine resource availability; and dynamically assign bandwidth to the dedicated network slice based on the resource availability.

Example 25 is a method for network slicing for edge-based delivery of generative artificial intelligence prompts comprising: generating a dedicated network slice, on a network, for transmitting generative artificial intelligence prompts to a plurality of edge computing devices located at subscriber premises, each edge computing device comprising an artificial intelligence (AI) processor configured to generate content locally based on received generative artificial intelligence prompts; receiving a generative artificial intelligence prompt from a content provider; optimizing network resource usage for transmission of the generative artificial intelligence prompt by controlling transmission timing of the generative artificial intelligence prompts over the dedicated network slice to an edge computing device of the plurality of edge computing devices; and transmitting the generative artificial intelligence prompt to the edge computing device.

In Example 26, the subject matter of Example 25 includes, transmitting an AI model to the edge computing device for local storage in a memory of the edge computing device; and monitoring delivery of content generated by the edge computing device using the AI model and the generative artificial intelligence prompts to collect a plurality of metrics.

In Example 27, the subject matter of Example 26 includes, evaluating the plurality of metrics to identify a configuration optimization for allocation of the dedicated network slice; and refining an allocation AI model by applying the configuration optimization to the allocation AI model.

In Example 28, the subject matter of Examples 25-27 includes, receiving, via a management user interface, a request from the content provider to manage an AI model at the plurality of edge computing devices, the AI model stored locally at each edge computing device of the plurality of edge computing devices, and wherein the content is generated locally using the generative artificial intelligence prompt and the AI model; upon successful authentication of the content provider via the management user interface, transmitting the AI model to the plurality of edge computing devices; and validating successful storage of the AI model by each edge computing device of the plurality of edge computing devices.

In Example 29, the subject matter of Example 28 includes, upon determining that storage of the AI model was unsuccessful, reverting the AI model to an immediately preceding version of the AI model.

In Example 30, the subject matter of Examples 25-29 wherein, the network is a passive optical network (PON).

In Example 31, the subject matter of Examples 25-30 wherein, the edge computing device is a generative AI appliance.

In Example 32, the subject matter of Examples 25-31 wherein, the edge computing device is identified as a target for the generative artificial intelligence prompt based on network proximity of the edge computing device to a subscriber computing device designated as an end point for the content.

In Example 33, the subject matter of Examples 25-32 includes, transmitting the content from the edge computing device to a subscriber computing device designated as an end point for the content.

In Example 34, the subject matter of Examples 25-33 includes, isolating the dedicated network slice from other content providers transmitting generative artificial intelligence prompts on the network.

In Example 35, the subject matter of Examples 25-34 wherein, transmission of the generative artificial intelligence prompt has a lower bandwidth utilization than transmission of generated content from the content provider.

In Example 36, the subject matter of Examples 25-35 includes, evaluating traffic of the network to determine resource availability; and dynamically assigning bandwidth to the dedicated network slice based on the resource availability.

Example 37 is at least one machine-readable medium including instructions that, when executed by processing circuitry, cause the processing circuitry to perform operations to implement of any of Examples 1-36.

Example 38 is an apparatus comprising means to implement of any of Examples 1-36.

Example 39 is a system to implement of any of Examples 1-36.

Example 40 is a method to implement of any of Examples 1-36.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims.

## Claims

1. A system for network slicing for edge-based delivery of generative artificial intelligence prompts comprising:
at least one processor; and
memory comprising instructions that, when executed by the at least one processor, cause the at least one processor to perform operations to:
generate a dedicated network slice, on a network, for transmitting generative artificial intelligence prompts to a plurality of edge computing devices located at subscriber premises, each edge computing device comprising an artificial intelligence, AI, processor configured to generate content locally based on received generative artificial intelligence prompts;
receive a generative artificial intelligence prompt from a content provider;
optimize network resource usage for transmission of the generative artificial intelligence prompt by controlling transmission timing of the generative artificial intelligence prompts over the dedicated network slice to an edge computing device of the plurality of edge computing devices; and
transmit the generative artificial intelligence prompt to the edge computing device.

2. The system of claim 1, the memory further comprising instructions that, when executed by the at least one processor, cause the at least one processor to perform operations to:
transmit an AI model to the edge computing device for local storage in a memory of the edge computing device; and
monitor delivery of content generated by the edge computing device using the AI model and the generative artificial intelligence prompts to collect a plurality of metrics.

3. The system of claim 2, the memory further comprising instructions that, when executed by the at least one processor, cause the at least one processor to perform operations to:
evaluate the plurality of metrics to identify a configuration optimization for allocation of the dedicated network slice; and
refine an allocation AI model by applying the configuration optimization to the allocation AI model.

4. The system of any one of claims 1 to 3, the memory further comprising instructions that, when executed by the at least one processor, cause the at least one processor to perform operations to:
receive, via a management user interface, a request from the content provider to manage an AI model at the plurality of edge computing devices, the AI model stored locally at each edge computing device of the plurality of edge computing devices, and wherein the content is generated locally using the generative artificial intelligence prompt and the AI model;
upon successful authentication of the content provider via the management user interface, transmit the AI model to the plurality of edge computing devices; and
validate successful storage of the AI model by each edge computing device of the plurality of edge computing devices,
wherein the memory optionally further comprises instructions that, when executed by the at least one processor, cause the at least one processor to perform operations to, upon a determination that storage of the AI model was unsuccessful, revert the AI model to an immediately preceding version of the AI model.

5. The system of any one of claims 1 to 4, wherein the network is a passive optical network, PON.

6. The system of any one of claims 1 to 5, wherein the edge computing device is a generative AI appliance and/or wherein the edge computing device is identified as a target for the generative artificial intelligence prompt based on network proximity of the edge computing device to a subscriber computing device designated as an end point for the content.

7. The system of any one of claims 1 to 6, the memory further comprising instructions that, when executed by the at least one processor, cause the at least one processor to perform operations to transmit the content from the edge computing device to a subscriber computing device designated as an end point for the content.

8. The system of any one of claims 1 to 7, the memory further comprising instructions that, when executed by the at least one processor, cause the at least one processor to perform operations to isolate the dedicated network slice from other content providers transmitting generative artificial intelligence prompts on the network.

9. The system of any one of claims 1 to 8, wherein transmission of the generative artificial intelligence prompt has a lower bandwidth utilization than transmission of generated content from the content provider.

10. The system of any one of claims 1 to 9, the memory further comprising instructions that, when executed by the at least one processor, cause the at least one processor to perform operations to:
evaluate traffic of the network to determine resource availability; and
dynamically assign bandwidth to the dedicated network slice based on the resource availability.

11. A method for network slicing for edge-based delivery of generative artificial intelligence prompts comprising:
generating a dedicated network slice, on a network, for transmitting generative artificial intelligence prompts to a plurality of edge computing devices located at subscriber premises, each edge computing device comprising an artificial intelligence, AI, processor configured to generate content locally based on received generative artificial intelligence prompts;
receiving a generative artificial intelligence prompt from a content provider;
optimizing network resource usage for transmission of the generative artificial intelligence prompt by controlling transmission timing of the generative artificial intelligence prompts over the dedicated network slice to an edge computing device of the plurality of edge computing devices; and
transmitting the generative artificial intelligence prompt to the edge computing device.

12. The method of claim 11, further comprising:
transmitting an AI model to the edge computing device for local storage in a memory of the edge computing device; and
monitoring delivery of content generated by the edge computing device using the AI model and the generative artificial intelligence prompts to collect a plurality of metrics.

13. The method of claim 12, further comprising:
evaluating the plurality of metrics to identify a configuration optimization for allocation of the dedicated network slice; and
refining an allocation AI model by applying the configuration optimization to the allocation AI model.

14. The method of any one of claims 11 to 13, further comprising:
receiving, via a management user interface, a request from the content provider to manage an AI model at the plurality of edge computing devices, the AI model stored locally at each edge computing device of the plurality of edge computing devices, and wherein the content is generated locally using the generative artificial intelligence prompt and the AI model;
upon successful authentication of the content provider via the management user interface, transmitting the AI model to the plurality of edge computing devices; and
validating successful storage of the AI model by each edge computing device of the plurality of edge computing devices.

15. At least one machine-readable medium comprising instruction for network slicing for edge-based delivery of generative artificial intelligence prompts that, when executed by at least one processor, cause the at least one processor to perform the method of any one of claims 11 to 14.
